Europäisches Patentamt

European Patent Office

Office européen des brevets

(11) Publication number: **0 256 717 B1**

# EUROPEAN PATENT SPECIFICATION

(45) Date of publication of patent specification: **18.03.92**  (51) Int. Cl.⁵: **B29C 67/20**, B29C 59/00, B26F 1/00, //B29L7:00

(21) Application number: **87306760.7**

(22) Date of filing: **30.07.87**

(54) Process for the manufacture of microporous film.

(30) Priority: **04.08.86 US 892660**

(43) Date of publication of application: **24.02.88 Bulletin 88/08**

(45) Publication of the grant of the patent: **18.03.92 Bulletin 92/12**

(84) Designated Contracting States: **DE FR GB GR IT**

(56) References cited:
EP-A- 0 020 083      EP-A- 0 066 672
FR-A- 2 073 807      FR-A- 2 484 901
GB-A- 1 086 596      GB-A- 2 066 130
GB-A- 2 151 538      US-A- 3 073 304
US-A- 3 683 559

(73) Proprietor: **REXENE PRODUCTS COMPANY (A Delaware Corporation) 2400 South Grandview Avenue Odessa Texas 79766(US)**

(72) Inventor: **Douglas, Noel Lawrence 1023 Warren Chippewa Falls Wisconsin 54729(US)**

(74) Representative: **Myerscough, Philip Boyd et al J.A.Kemp & Co. 14, South Square Gray's Inn London, WC1R 5EU(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

Porous films have been produced in the past by a number of processes. One group of such processes comprises forming a film of a thermoplastic resin composition containing a noncompatible filler and then stretching the film in one or more directions to impart a microporous structure to the film. Examples of these techniques are disclosed in US-A-4,472,328 and GB-A-2,151,538. Generally, the physical properties, especially the strength and the hydrostatic pressure resistance, of the films so produced are not as good as would be desired.

Other processes have been disclosed for manufacture of porous films, which processes comprise forming an unfilled thermoplastic resin film and then passing the film through the nip of two rollers, one of these having a smooth, often heated, surface and the other having either projections in its surface as in US-A-3,073,304 or an abrasive surface coating as in US-A-3,718,059. These latter processes have not been entirely successful because of the manufacturing cost of the rollers having surface projections and also because of operational problems causing undesired large variations in the film pore diameters. In addition the improvements in the moisture vapor transmission rates have been less than desired using the smooth pressure roller techniques.

US-A-4,364,985 discloses a process for preparing a porous, filled thermoplastic film, which process requires the particles of the filler to extend from one film surface to the other. The filled film is passed over a set of serially positioned abrading rollers for the purpose of rubbing off the surfaces of the film that overlie the outermost portions of the filler particles. A drawback of this method is that the average filler particle size has to be about equal to the film thickness, which obviously limits the process to the production of thin films only.

The present invention provides a process for the production of a microporous film having an improved moisture vapor transmission rate and an acceptable hydrostatic pressure resistance.

In accordance with the present invention there is provided a process for the production of an unoriented microporous film which comprises passing an unoriented film prepared from a high molecular weight filled thermoplastic resin composition through at least one set of two cooperating nip rollers, each nip roller being provided with an abrasive surface.

The high molecular weight thermoplastic resin can be any alphaolefin based component from which films and sheets which are foldable, soft and relatively strong can be produced. Suitable resin components are high molecular weight polyethylenes, linear low polyethylenes, polypropylene, polybutylene and ethylene-propylene copolymers. Mixtures of such resin components can be used.

For diaper linings and other clothing and sanitary applications, a particularly suitable resin comprises 65 to 95 wt % of a low density polyethylene having a density from 0.910 to 0.935 cm$^3$, and at least 5 wt % of at least one resin component selected from high density polyethylene having a density exceeding 0.940 g/cm$^3$, a linear low density polyethylene of a density of from 0.915 to 0.945 g/cm$^3$ and high molecular weight polybutylene and mixtures thereof. The linear low density polyethylene is an interpolymer of ethylene and one or more $C_4$ - $C_{12}$ alpha olefins. Especially preferred are the copolymers of ethylene with hexene-1 and/or octene-1. The melt index of the total resin should be between 0.5 and 10 g/10 min.

The resin composition also contains a filler, such as calcium carbonate, barium sulfate, mica, polytetrafluoroethylene and titanium dioxide. The concentration of the filler should be between 5 and 25 parts by weight per 100 parts by weight of the resin. Preferably, the filler is calcium carbonate having an average particle size between 3 and 30 $\mu$m.

For appearance, the resin composition usually contains a whitener such as titanium dioxide pigment when titanium dioxide is not the principal filler. The concentration thereof is generally maintained between 3 and 16 parts by weight per 100 parts by weight of the resin.

Other additives such as antioxidants, lubricants and stabilizers may also be added for their known purposes and in conventional quantities.

The film can be produced by any known commercial process, e.g. by casting or blown film techniques. The film thickness should range between 23 and 150 $\mu$m (0.9 and 6 mil). Prior to treatment according to the process of this invention, the film may be subjected to an embossment or other treatment to impart a decorative pattern onto the surface of the film.

The nip rollers have an abrasive surface which is usually provided in the form of coating with an abrasive material such as sand paper, emery cloth, garnet paper or aluminum oxide. The abrasive typically has a grit size ranging between 80 and 250 grain. It is not necessary that the entire surface of each of the rollers be covered with the abrasive. The pressure at the nip of the rollers can vary between 6.9 and 69 kPa gauge (10 psig and 100 psig). The temperature is maintained at ambient conditions.

It is not necessary that a set of the cooperating nip rollers have equal roller diameters, and one roller can have a larger diameter than the other. It is also possible to have one larger roller in cooperative relationship with more than one other abrasive roller of smaller diameter. For instance, the equivalence of five serially positioned nips can be accomplished by passing the film over an abrasive nip roller partially surrounded by and in cooperative relation with five abrasive nip rollers of smaller diameter.

The films produced by the process of this invention have excellent properties making them especially useful in disposable film applications, such as diaper back sheets. Specifically, the films exhibit excellent moisture vapor transmission rates while having an acceptable hydrostatic pressure resistance. Because no stretching or orientation is required to provide the desired porosity, the physical properties are virtually unaffected and remain at desired high levels. Also, the appearance of the film products of the invention, as measured by opacity, softness and gloss, is very good.

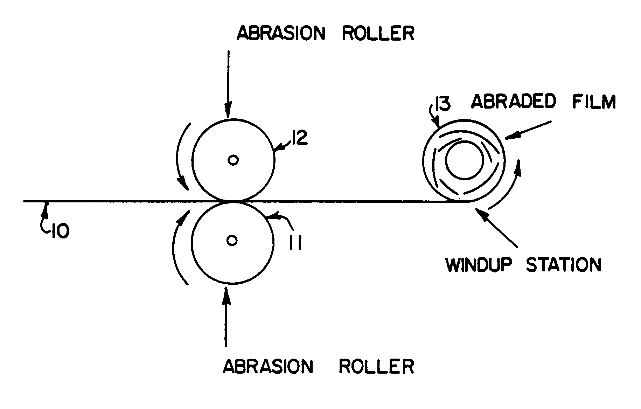

Reference is now had to the Figure which schematically depicts an embodiment of the process of the invention.

Film 10 is fed from a supply roll (not shown) through the nip between abrading rollers 11 and 12 at least partially covered with a suitable abrasive. By means of the rotations of the rollers 11 and 12 in opposite directions from each other the abraded film is carried to windup onto rewind roller 13. It is to be understood that various takeoff rollers may be present in the assembly to facilitate the movement of the untreated film to the treated film wind-up station. Also, the invention covers the use of additional sets of cooperating abrading rollers (not shown) in the process, to provide further improvement in porosity as measured by moisture vapor transmission rate (MVTR).

For a better understanding reference is had to the following example.

EXAMPLE 1

A blend was prepared from 60.5 wt % low density polyethylene (0.924 g/cm$^3$ density, 0.8 MI), 22.3 wt % high density polyethylene (0.967 g/cm$^3$ density, 5.0 MI), 2.0 wt % high molecular weight polybutylene and 8.2 wt. % calcium carbonate (particle size of 3 $\mu$m) and 7.0 wt % titanium dioxide whitener. A 25 $\mu$m (1 mil) cast film was produced from this blend and subsequently embossed to produce a patterned film having a thickness of about 56 $\mu$m (2.2 mil). The embossed film was subjected to abrasion without any stretching or orientation in any direction prior to the treatment. The abrasion treatment was carried out by passing the film 15 times through the nip of two rollers covered uniformly with 80 grit sand paper at a nip pressure of 0.3 MPa (40 psi). Each of the rollers had a length of 41 cm (16 inches) and a diameter of 7.6 cm (3 inches). The speed of each of the rollers was 122 m (400 feet) per minute and the film passed through the nip at the same rate. The abraded film had a MVTR of about 1000 g/m$^2$/24h, a 50 fold increase over that of the embossed film before the abrasion treatment. Table 1 below shows the physical properties of the porous film product of this example:

## TABLE

| | |
|---|---|
| Film Thickness | |
|    Initial $\mu$m – (mil) | 25 (1) |
|    Embossed $\mu$m – (mil) | 56 (2.2) |
| MI – g/10 min | 4.5 |
| Opacity ASTM D–1003 | 46 |
| Gloss ASTM D–2457 | 4.4 |
| Elongation M. D. – % | 59 |
|         T. D. – % | 60 |
| Tensile Strength M. D. – MPa(psi) | 20.37 (2955) |
|         T. D. – MPa(psi) | 7.6 (1100) |
| 1% Secant Modulus M. D. – MPa(psi) | 112.5 (16,315) |
|         T. D. – MPa(psi) | 98.01 (14,215) |
| Tear Strength    M. D. – KPa(psi) | 117   (17) |
|         T. D. – KPa(psi) | 717   (104) |
| Coeff. of Friction | 0.53 |
| Spencer Impact g/25.4 $\mu$m | +45 |
| MVTR g/m$^2$/24 hours | 1000 |
| Hydrostatic resistance | 40 |

## Claims

1. A process for the production of an unoriented microporous film which comprises passing an unoriented film prepared from a high molecular weight filled thermoplastic resin composition through at least one set of at least two cooperative nip rollers, each nip roller having an abrasive grit surface.

2. A process according to claim 1 wherein the pressure at the nip of the rollers is between 6.9 and 69 KPa gauge (10 and 100 psig).

3. A process according to claim 1 or 2 wherein the abrasive has a grit size between 80 and 250 grain.

4. A process according to claim 1, 2 or 3 wherein the thermoplastic resin composition comprises at least one of polyethylene, linear low polyethylene, polypropylene, polybutylene and ethylene-propylene copolymers.

5. A process according to claim 4 wherein the resin comprises from 65 to 95 wt % of a low density polyethylene having a density of 0.910 to 0.935 g/cm$^3$ and at least 5 wt % of at least one resin component selected from high density polyethylene having a density exceeding 0.940 g/cm$^3$, a linear low density polyethylene having a density of 0.915 to 0.945 g/cm$^3$ and a high molecular weight polybutylene.

6. A process according to claim 5 wherein the resin is a blend of the low density polyethylene, the high density polyethylene and the polybutylene.

7. A process according to any one of the preceding claims wherein the thermoplastic resin composition comprises as filler at least one of calcium carbonate, barium sulfate, mica, polytetrafluoroethylene and titanium dioxide in an amount between 5 and 25 parts by weight per 100 parts by weight of the resin.

4

**8.** A process according to claim 7 wherein the average particle size of the filler is from 3 to 30 $\mu$m.

**9.** A process according to any one of the preceding claims wherein the resin composition contains a whitener pigment in an amount from 3 to 16 parts by weight per 100 parts by weight of resin.

**10.** A process according to claim 9 wherein the thermoplastic resin composition contains from 5 to 25 parts calcium carbonate filler having an average particle size from 3 to 30 $\mu$m and from 3 to 10 parts titanium dioxide whitener per 100 parts resin.

**Revendications**

**1.** Procédé de production d'un film microporeux non orienté, qui consiste à faire passer un film non orienté, obtenu à partir d'une composition de résine thermoplastique chargée, de masse moléculaire élevée, à travers au moins un ensemble d'au moins deux cylindres de pression travaillant en commun, chacun d'eux étant pourvu d'une surface de particules abrasives.

**2.** Procédé selon la revendication 1, dans lequel la pression dans l'espacement entre cylindres est de l'ordre de 6,9 à 69 kPa manométriques (10 à 100 psig).

**3.** Procédé selon la revendication 1 ou 2, dans lequel l'abrasif présente une taille de particules comprise entre 80 et 250 grains.

**4.** Procédé selon l'une des revendications 1, 2 ou 3, dans lequel la composition de résine thermoplastique comprend au moins un composant choisi parmi: polyéthylène, polyéthylène linéaire basse densité, polypropylène, polybutylène et copolymères éthylène-propylène.

**5.** Procédé selon la revendication 4, dans lequel la résine comporte 65 à 95 % en poids d'un polyéthylène basse densité, dont la densité vaut de 0,910 à 0,935 g/cm$^3$, et au moins 5 % en poids d'au moins une résine constituante choisie dans le groupe formé par un polyéthylène haute densité de densité supérieure à 0,940 g/cm$^3$, un polyéthylène linéaire basse densité de densité valant entre 0,915 et 0,945 g/cm$^3$, et un polybutylène de masse moléculaire élevée.

**6.** Procédé selon la revendication 5, dans lequel la résine est un mélange de polyéthylène basse densité, de polyéthylène haute densité et de polybutylène.

**7.** Procédé selon l'une quelconque des revendications précédentes, dans lequel la composition de résine thermoplastique comprend, comme charge, au moins une charge choisie parmi: carbonate de calcium, sulfate de baryum, mica, polytétrafluoroéthylène et dioxyde de titane en une quantité comprise entre 5 et 25 parties en poids pour 100 parties en poids de résine.

**8.** Procédé selon la revendication 7, dans lequel la taille moyenne des particules de la charge est de 3 à 30 $\mu$m.

**9.** Procédé selon l'une quelconque des revendications précédentes, dans lequel la composition de résine renferme un pigment de blanchiment en une quantité de 3 à 16 parties en poids pour 100 parties en poids de résine.

**10.** Procédé selon la revendication 9, dans lequel la composition de résine thermoplastique renferme de 5 à 25 parties d'une charge de carbonate de calcium, dont la taille moyenne des particules est de 3 à 30 $\mu$m, et de 3 à 10 parties d'agent de blanchiment dioxyde de titane, pour 100 parties de résine.

**Patentansprüche**

**1.** Verfahren zur Herstellung einer unorientierten, mikroporösen Folie, bei dem eine unorientierte Folie, die aus einer Füllstoff enthaltenden, hochmolekularen, thermoplastischen Harzzusammensetzung hergestellt ist, durch mindestens einen Satz von mindestens zwei zusammenwirkenden Haltewalzen geführt wird, wobei jede Haltewalze eine Oberfläche aus grobkörnigem Material aufweist.

**2.** Verfahren nach Anspruch 1, bei dem der Überdruck am Walzenspalt zwischen 6,9 und 69 kPa (10 und 100 psig) beträgt.

**3.** Verfahren nach Anspruch 1 oder 2, bei dem das grobkörnige Material eine Körnungsgröße zwischen 80 und 250 aufweist.

**4.** Verfahren nach Anspruch 1, 2 oder 3, bei dem die thermoplastische Harzzusammensetzung mindestens Polyethylen, lineares niederes Polyethylen, Polypropylen, Polybutylen oder Ethylen-Propylen-Copolymere umfaßt.

**5.** Verfahren nach Anspruch 4, bei dem das Harz 65 bis 95 Gew.% eines Polyethylens niederer Dichte mit einer Dichte von 0,910 bis 0,935 g/cm$^3$ und mindestens 5 Gew.% mindestens einer Harzkomponente ausgewählt aus Polyethylen hoher Dichte mit einer Dichte, die 0,940 g/cm$^3$ übersteigt, einem linearen Polyethylen niederer Dichte mit einer Dichte von 0,915 bis 0,945 g/cm$^3$ und einem Polybutylen mit hohem Molekulargewicht enthält.

**6.** Verfahren nach Anspruch 5, bei dem das Harz eine Mischung aus dem Polyethylen niederer Dichte, dem Polyethylen hoher Dichte und dem Polybutylen ist.

**7.** Verfahren nach einem der vorhergehenden Ansprüche, bei dem die thermoplastische Harzzusammensetzung als Füllstoff mindestens Calciumcarbonat, Bariumsulfat, Mika, Polytetrafluorethylen oder Titandioxid in einer Menge zwischen 5 und 25 Gewichtsteilen pro 100 Gewichtsteile Harz umfaßt.

**8.** Verfahren nach Anspruch 7, bei dem die durchschnittliche Teilchengröße des Füllstoffes 3 bis 30 $\mu$m beträgt.

**9.** Verfahren nach einem der vorhergehenden Ansprüche, bei dem die Harzzusammensetzung ein Weißmacherpigment in einer Menge von 3 bis 16 Gewichtsteilen pro 100 Gewichtsteile Harz enthält.

**10.** Verfahren nach Anspruch 9, bei dem die thermoplastische Harzzusammensetzung 5 bis 25 Teile Calciumcarbonatfüllstoff mit einer durchschnittlichen Teilchengröße von 3 bis 30 $\mu$m und 3 bis 10 Teile Titandioxidweißmacher pro 100 Teile Harz enthält.

ABRASION ROLLER

13 ABRADED FILM

12

10

11

WINDUP STATION

ABRASION ROLLER